# EUROPÄISCHE PATENTSCHRIFT

(11) **EP 4 532 944 B1**
(45) Veröffentlichungstag und Bekanntmachung des Hinweises auf die Patenterteilung: **06.05.2026**
(21) Anmeldenummer: 22730833.5
(22) Anmeldetag: 25.05.2022
(51) Int. Cl.: F16C 33/62, F16C 33/64, F16C 19/06, F16C 33/30, F16C 33/58, F16C 33/66, F16C 33/76, F16C 35/063, F16C 35/067, F16C 33/32, F16C 33/38

(54) **WÄLZLAGER MIT MEHRKOMPONENTEN-KUNSTSTOFFLAGERRING**
ROLLER BEARING COMPRISING A MULTI-COMPONENT PLASTICS BEARING RING
ROULEMENT À ROULEAUX COMPRENANT UNE BAGUE DE ROULEMENT EN MATIÈRE PLASTIQUE À PLUSIEURS COMPOSANTS

(43) Veröffentlichungstag der Anmeldung: 09.04.2025
(73) Patentinhaber: igus SE & Co. KG, 51147 Köln (DE)
(72) Erfinder: BAUS, Gerhard, 53572 Unkel (DE); SEMSROTH, Marcus, 53424 Remagen (DE); WÖLKE-GLOMB, Lena, 53797 Lohmar (DE)
(74) Vertreter: Lippert Stachow Patentanwälte Rechtsanwälte
(86) Internationale Anmeldenummer: PCT/EP2022/064348
(87) Internationale Veröffentlichungsnummer: WO 2023/227220

(56) Entgegenhaltungen:
- EP-B1- 3 287 298
- WO-A1-2013/017157
- DE-A1- 102015 200 376
- DE-A1- 102018 124 335
- GB-A- 940 010
- JP-A- 2016 080 122
- US-A- 4 892 421
- US-B2- 7 422 372

## Beschreibung

Die Erfindung betrifft ein Wälzlager gemäß dem Oberbegriff von Anspruch 1 sowie eine Vorrichtung, die ein solches Wälzlager sowie ein äußeres und ein inneres Bauteil aufweist, wobei die beiden Bauteile durch das Wälzlager drehbar zueinander gelagert und miteinander verbunden sind. Gattungsgemäße Wälzlager sind im Stand der Technik hinlänglich bekannt. Solche Wälzlager weisen zwei Lagerringe auf, nämlich einen Innenring und einen Außenring. Der Innenring ist zumindest abschnittsweise von dem Außenring umgeben und zumindest abschnittsweise radial von diesem beabstandet, wobei zwischen Innenring und Außenring Wälzkörper vorgesehen sind, die dazu ausgebildet sind, an beiden Lagerringen abzurollen, während sie an den beiden Lagerringen anliegen. Hierdurch sind die Lagerringe um eine Achse des Wälzlagers zueinander drehbar gelagert, wobei aufgrund des Vorsehens der Wälzkörper solche Wälzlager eine nicht unerhebliche radiale Kraft aufnehmen können. In weit verbreiteten Ausführungsformen sind solche Wälzlager als Kugellager ausgebildet, bei denen Kugeln als Wälzkörper vorgesehen sind. Ein solches Wälzlager, bei dem die Lagerringe jeweils aus zwei verschiedene Kunststoffringen bestehen, ist z.B. aus dem Dokument US4892421A bekannt. Die Erfindung bezieht sich im Besonderen auf solche Kugellager. Ferner sind in bevorzugten Ausführungsformen Wälzlager als Rillenkugellager ausgebildet, bei denen der Innenring und der Außenring gemeinsam eine rillenartige Führung für die Kugeln ausbilden, in denen die Kugeln zwischen den Lagerringen geführt sind, wodurch diese Rillenkugellager auch eine gewisse axiale Kraft aufnehmen können. Die Erfindung bezieht sich im Besonderen auf solche Rillenkugellager. Allgemein sei darauf hingewiesen, dass bei der Eignung eines Wälzlagers zur Aufnahme einer Kraft ausgegangen wird von einer Kraft, die relativ zwischen Innenring und Außenring des Wälzlagers wirkt. Ferner sei allgemein darauf hingewiesen, dass sich der Begriff "axial" auf eine Richtung entlang der Achse des Wälzlagers bezieht, um die die Lagerringe zueinander drehbar gelagert sind, und dass sich der Begriff "radial" auf eine senkrecht auf dieser Achse stehende Richtung bezieht.

Bei gattungsgemäßen Wälzlagern weisen die Lagerringe somit jeweils einen Führungsabschnitt der Führung auf, die zwischen den Lagerringen ausgebildet ist und in der die Wälzkörper zwischen den Lagerringen gelagert sind. Die Führungsabschnitte der Lagerringe liegen sich somit radial gegenüber, und radial zwischen ihnen sind die Wälzkörper angeordnet. Die Führungsabschnitte sind jeweils um die Achse geschlossen umlaufend ausgebildet. Die Kugeln sind in der Führung um die Achse verteilt, insbesondere gleichmäßig verteilt, und an beiden Führungsabschnitten anliegend in der Führung angeordnet, sodass bei einer Drehung der Lagerringe zueinander um die Achse die Wälzkörper an beiden Führungsabschnitten abrollen. Grundsätzlich kann mit einem solchen Wälzlager eine reibungsarme um die Achse drehbare Lagerung der beiden Lagerringe zueinander zuverlässig gewährleistet sein, wobei die Lagerringe sowohl axial als auch radial zuverlässig zueinander positioniert sind. Allerdings treten bei solchen Wälzlagern verschiedene Schwierigkeiten auf. So ist bei üblichen Wälzlagern zum Ermöglichen einer dauerhaft zuverlässigen Funktion eine erhebliche Schmierung der Wälzkörper in der Führung erforderlich, und bei einer zu starken Presspassung der Wälzlager zwischen den Lagerringen ist die Reibung zu stark erhöht, was mit Verschleiß und bei erheblicher Drehzahl mit Erwärmung einhergeht, und bei zu geringer Presspassung besteht die Gefahr eines Spiels zwischen den Lagerringen. Darüber hinaus ist die Materialwahl zur Herstellung solcher Wälzlager schwierig. Denn zum einen muss eine hinreichende Stabilität der Lagerringe gewährleistet sein, zum anderen soll eine möglichst geringe Reibung zwischen Wälzkörpern und Lagerringen realisiert sein und darüber hinaus sollen die Wälzlager idealerweise sowohl für niedrige als auch für hohe Drehgeschwindigkeiten der Lagerringe zueinander um die Achse geeignet sein, und da solche Wälzlager im großen Umfang zur Lagerung verschiedenster Bauteile zueinander eingesetzt werden, sollen darüber hinaus die Lagerringe sowie das Wälzlager insgesamt möglichst kostengünstig realisierbar sein.

Der vorliegenden Erfindung liegt die Aufgabe zugrunde, ein Wälzlager bzw. eine Vorrichtung mit einem Wälzlager bereit zu stellen, das bzw. die zumindest einen Nachteil bzw. ein Problem, der bzw. das bei gattungsgemäßen Wälzlagern bzw. Vorrichtungen auftritt, zumindest teilweise behebt.

Als eine Lösung der der Erfindung zugrunde liegenden Aufgabe schlägt die Erfindung ein Wälzlager mit den Merkmalen gemäß Anspruch 1 vor. Das Wälzlager umfasst einen Innenring und einen Außenring als zwei um eine Achse zueinander drehbar gelagerte Lagerringe des Wälzlagers. Innenring und Außenring bilden jeweils einen um die Achse umlaufenden, insbesondere ununterbrochen geschlossen umlaufenden Führungsabschnitt einer zwischen den Lagerringen vorgesehenen Führung aus. Der von dem Innenring ausgebildete Führungsabschnitt liegt dem von dem Außenring ausgebildeten Führungsabschnitt radial gegenüber. Die Führungsabschnitte können durch radial zueinander weisende Seiten von Innenring und Außenring ausgebildet sein. In der Führung sind Wälzkörper um die Achse verteilt und an beiden Führungsabschnitten anliegend angeordnet. Bevorzugt sind die Wälzkörper durch ihr Anliegen an den beiden Führungsabschnitten sowohl in ihrer axialen Position als auch in ihrem radialen Abstand von der Achse festgelegt. Bei einer Drehung der Lagerringe zueinander um die Achse rollen die Wälzkörper an beiden Führungsabschnitten ab. Durch das Abrollen der Wälzkörper an den Führungsabschnitten sind die Lagerringe mittels der Wälzkörper drehbar zueinander gelagert. Bevorzugt sind die Wälzkörper um die Achse gleichmäßig verteilt, sodass stets derselbe Abstandswinkel um die Achse zwischen zwei in Umlaufrichtung um die Achse benachbarten der Wälzkörper vorgesehen ist. Bevorzugt ist das Wälzlager als Kugellager ausgebildet, wobei die Wälzkörper als Kugeln ausgebildet sind. In anderen Ausführungsformen können auch andere Wälzkörper als Kugeln vorgesehen sein, beispielsweise Zylinder. Erfindungsgemäß weist zumindest einer der Lagerringe einen Gleitring auf, der den Führungsabschnitt des Lagerrings ausbildet, sowie einen Stabilisierungsring, der um die Achse umlaufend an dem Gleitring anliegt, wobei der Gleitring aus einem ersten Kunststoff und der Stabilisierungsring aus einem zweiten Kunststoff hergestellt sind. Erster und zweiter Kunststoff unterscheiden sich voneinander, wobei der erste Kunststoff weicher ist als der zweite Kunststoff. Das erfindungsgemäße Wälzlager kann in Ausführungsformen Merkmale aufweisen, die ohne einen Zusammenhang mit gattungsgemäßen Wälzlagern offenbart sind.

Die erfindungsgemäße Ausgestaltung des Wälzlagers bringt besondere Vorteile mit sich. Indem der erste Kunststoff, aus dem der Gleitring hergestellt ist, der den Führungsabschnitt des Lagerrings ausbildet, weicher ist als der zweite Kunststoff, aus dem der Stabilisierungsring hergestellt ist, kann der erste Kunststoff gezielt möglichst optimiert für ein reibungsarmes und geräuscharmes Zusammenwirken mit den Wälzkörpern ausgebildet sein, ohne dass die Stabilität des Lagerrings insgesamt darunter leidet, da der Stabilisierungsring aufgrund seiner Härte und damit einhergehenden Festigkeit eine hinreichende Stabilisierung des Lagerrings gewährleistet. Besonders bevorzugt ist der erste Kunststoff ein Gleitwerkstoff. Gleitwerkstoffe sind als Kunststoffe mit guten Gleiteigenschaften hinlänglich bekannt. Besonders bevorzugt ist als Gleitwerkstoff ein tribologisches Polymer vorgesehen, d. h. ein Polymerkunststoff, der tribologisch optimiert ist, d. h. gute Reibungs- und/oder Schmierungseigenschaften aufweist. Ein solcher Polymerkunststoff wird auch als Tribopolymer bezeichnet. Ein solcher Gleitwerkstoff ist besonders bevorzugt im Spritzgussverfahren verarbeitbar. Ein Tribopolymer kann beispielsweise ein thermoplastisches Tribopolymer oder ein duroplastisches Tribopolymer sein. Das Tribopolymer enthält typischerweise ein oder mehrere Basispolymere sowie Additive, wobei die Additive gezielt zur Optimierung der Verschleiß- bzw. Reibminderung vorgesehen sein können. Beispielsweise können als Additive Schmiermittel, beispielsweise feinteilige Feststoffschmiermittel, beispielsweise Molybdändisulfid oder Graphit, vorgesehen sein. In einer Ausführungsform enthält das Tribopolymer weitere Additive, beispielsweise zu Stabilisierungszwecken, wie beispielsweise Füllstoffe, insbesondere Kunststoff- oder Textilfasern oder -partikel. Als Basispolymere kommen beispielsweise Polyethylen (PE), Polypropylen (PP), Polyacetal (POM), Polycarbonat (PC), Polyamid (PA, PA6, PA12, PA46, PA66), Polyvinylchlorid (PVC) und Polytetrafluorethen (PTFE), Polyketon (PK), AcrylnitrilButadien-Styrol (ABS), für spezielle Anwendungen, beispielsweise in der Lebensmittelindustrie und/oder für eine gute Beständigkeit bei hohen Temperaturen, beispielsweise Polyetherketon (PEK), Polyetheretherketon (PEEK), Polysulfon (PSU), Polyphenylsulfon (PPSU), Polyphenylensulfid (PPS), wobei das Basispolymer beispielsweise auch als Compound ausgebildet sein kann, das eine Mischung von zumindest zwei der oben angegebenen Polymere ist. Ein duroplastisches Tribopolymer kann als Basispolymer beispielsweise Phenolharz aufweisen. Aufgrund der erfindungsgemäßen Ausgestaltung kann das Wälzlager in besonders bevorzugten Ausführungsformen ein schmiermittelfreies Wälzlager sein, sodass die Wälzkörper in der Führung schmiermittelfrei gelagert sind. Ein solches schmiermittelfreies Wälzlager kann besonders wartungsarm und umweltfreundlich sein und darüber hinaus für den Einsatz in kritischen Umgebungen, wie beispielsweise in der Lebensmittelindustrie, besonders vorteilhaft sein.

Indem der Gleitring den Führungsabschnitt des Lagerrings ausbildet, rollen die Wälzkörper während einer vollständigen Umdrehung der Lagerringe zueinander um die Achse ununterbrochen an dem Gleitring und somit dem ersten Kunststoff ab. Somit kann durch die vorteilhaft wählbaren Eigenschaften des ersten Kunststoffs eine ununterbrochen geringe Reibung zwischen Wälzkörpern und dem Lagerring sichergestellt sein. Indem der Stabilisierungsring um die Achse umlaufend, insbesondere ununterbrochen geschlossen umlaufend, an dem Gleitring anliegt, kann der Stabilisierungsring über den gesamten Umlauf hinweg eine hinreichende Stabilität des Gleitrings sicherstellen.

Bevorzugt erstreckt sich der Stabilisierungsring über seinen gesamten Umlauf um die Achse über zumindest 50%, insbesondere über zumindest 80% der axialen Erstreckung des Gleitrings, bevorzugt über zumindest die gesamte axiale Erstreckung des Gleitrings hinweg. Bevorzugt weist der Gleitring als zwei radiale Seiten eine radiale Innenseite und eine radiale Außenseite auf, die jeweils ununterbrochen geschlossen um die Achse umlaufen, wobei er mit einer dieser radialen Seiten den Führungsabschnitt ausbildet und der Stabilisierungsring an der anderen dieser radialen Seiten anliegt, insbesondere über seinen gesamten Umlauf um die Achse ununterbrochen. Hierdurch kann mit dem Stabilisierungsring eine besonders effektive Stabilisierung des Lagerrings für den Anwendungsfall im Wälzlager erzeugt sein. Besonders bevorzugt liegen die Wälzkörper während einer Drehung der Lagerringe um 360 Grad zueinander um die Achse ununterbrochen mit einer mindestens fünfmal so großen Anlagefläche an dem Gleitring an als an dem Stabilisierungsring. Die Anlagefläche, mit der die Wälzkörper an dem Gleitring anliegen, ist somit mindestens fünfmal so groß wie die Anlagefläche, mit der sie and dem Stabilisierungsring anliegen. Bevorzugt liegen die Wälzkörper an dem Stabilisierungsring nicht an. Somit ist bevorzugt der Stabilisierungsring von den Wälzkörpern beabstandet, insbesondere in jeder möglichen Drehposition der Lagerringe um die Achse zueinander.

Allgemein bevorzugt weist jeder der Lagerringe jeweils einen Gleitring und einen Stabilisierungsring auf. Die vorliegend mit Bezug auf einen Lagerring in verschiedenen Ausführungsformen beschriebenen vorteilhaften Eigenschaften können dann jeweils bei einem oder bei beiden der Lagerringe vorgesehen sein. Indem beide Lagerringe, d. h. Innenring und Außenring, jeweils einen Gleitring und einen Stabilisierungsring wie vorliegend zu verschiedenen Ausführungsformen erläutert aufweisen, kann das gesamte Wälzlager besonders einfach reibungsarm und gleichzeitig robust ausgebildet sein. Besonders bevorzugt umschließt der Gleitring des Innenrings den Stabilisierungsring des Innenrings. Besonders bevorzugt umschließt der Stabilisierungsring des Außenrings den Gleitring des Außenrings. Somit bilden die Gleitringe von Innen- und Außenring die sich radial gegenüber liegenden Führungsabschnitte der Führung aus, in der die Wälzlager geführt angeordnet sind.

Allgemein bevorzugt weist der erste Kunststoff eine Härte mit einem Shore-D-Wert von weniger als 75, insbesondere weniger als 70, insbesondere weniger als 65, insbesondere weniger als 60 auf. Bevorzugt weist der erste Kunststoff eine Härte mit einem Shore-D-Wert in einem Bereich von 30 bis 75, insbesondere 35 bis 65, insbesondere 40 bis 60 auf. Allgemein besonders bevorzugt weist der zweite Kunststoff eine Härte mit einem Shore-D-Wert auf, der wenigstens um 5, insbesondere wenigstens um 10, insbesondere wenigstens um 15, insbesondere wenigstens um 20 größer ist als der Shore-D-Wert des ersten Kunststoffs. Allgemein bevorzugt weist der zweite Kunststoff eine Härte mit einem Shore-D-Wert auf, der mindestens 60, insbesondere mindestens 65, insbesondere mindestens 70, insbesondere mindestens 75 beträgt. Bevorzugt weist der zweite Kunststoff eine Härte mit einem Shore-D-Wert in einem Bereich von 60 bis 100, insbesondere 65 bis 100, insbesondere 70 bis 95, insbesondere 70 bis 90 auf. Die Erfinder haben festgestellt, dass durch eine Kombination von erstem und zweitem Kunststoff dergestalt, dass der zweite Kunststoff sehr hart ist, der erste Kunststoff jedoch immer noch eine erhebliche Härte aufweist, ein besonders robustes und gleichzeitig reibungsarmes Wälzlager mit den erfindungsgemäßen Merkmalen herstellbar ist. Allgemein bevorzugt ist ein Reibwert zwischen den Wälzkörpern und dem ersten Kunststoff geringer als ein Reibwert zwischen den Wälzkörpern und dem zweiten Kunststoff. Allgemein bevorzugt weist der erste Kunststoff einen höheren Anteil an Schmierstoffen auf als der zweite Kunststoff.

In einer Ausführungsform ist nur der erste Kunststoff als Gleitwerkstoff ausgebildet, in einer anderen Ausführungsform sind erster und zweiter Kunststoff als Gleitwerkstoff ausgebildet.

In einer Ausführungsform sind die Wälzkörper in einem um die Achse umlaufenden Lagerkäfig drehbar gelagert mit einem festgelegten Winkelabstand zueinander geführt. Der Lagerkäfig ist radial zwischen den Führungsabschnitten von Innenring und Außenring angeordnet. Durch das Vorsehen eines Lagerkäfigs, der bei einer Verdrehung der Lagerringe zueinander einen festgelegten Winkelabstand zwischen den Wälzkörpern sicherstellt, können die Lagerungseigenschaften des Wälzlagers besonders vorteilhaft sein. Besonders bevorzugt ist der Lagerring aus einem Gleitwerkstoff hergestellt. Der Gleitwerkstoff ist ein Kunststoff, der beispielsweise wie oben erläutert ausgebildet sein kann, insbesondere als Tribopolymer. Bevorzugt unterscheidet sich der Gleitwerkstoff, aus dem der Lagerkäfig hergestellt ist, von dem ersten Kunststoff und/oder von dem zweiten Kunststoff. Allgemein bevorzugt sind der Innenring, der Außenring und der Lagerkäfig jeweils aus Kunststoff hergestellt. Hierdurch kann das Wälzlager kostengünstig und umweltschonend bereitgestellt sein, wobei die Ausgestaltung von Innenring, Außenring und Lagerkäfig aus Kunststoff insbesondere für die Realisierung des Wälzlagers als schmiermittelfreies Wälzlager besonders vorteilhaft sein kann.

In einer Ausführungsform sind die Wälzköper aus einem Material hergestellt, das eine größere Härte als der erste Kunststoff und insbesondere eine größere Härte als der zweite Kunststoff aufweist. Besonders bevorzugt sind die Wälzkörper aus Glas, Metall, einem Kunststoff oder einer Keramik hergestellt. In einer besonders bevorzugten Ausführungsform sind die Wälzkörper aus Glas, einem Kunststoff oder einer Keramik hergestellt. Dies kann für die Realisierung eines schmiermittelfreien Wälzlagers besonders vorteilhaft sein.

In einer Ausführungsform liegen Gleitring und Stabilisierungsring sowohl in einer Richtung entlang der Achse als auch senkrecht zur Achse, d. h. axial und radial, formschlüssig aneinander an. Durch die formschlüssige Anlage kann eine besonders hohe Stabilität des Lagerrings gewährleistet sein.

Erfindungsgemäß weisen der Stabilisierungsring und der Gleitring jeweils um die Achse verteilte Vorsprünge auf, wobei jeweils zwischen zwei benachbarten Vorsprüngen jeweils eine Ausnehmung vorgesehen ist. Besonders bevorzugt sind die Vorsprünge und insbesondere die Ausnehmungen um die Achse gleichmäßig verteilt angeordnet. Jeweils einer der Vorsprünge des Stabilisierungsrings ist in jeweils einer der Ausnehmungen des Gleitrings angeordnet, und jeweils einer der Vorsprünge des Gleitrings ist in jeweils einer der Ausnehmungen des Stabilisierungsrings angeordnet. Durch das Ineinandergreifen von Vorsprüngen und Ausnehmungen von Stabilisierungsring und Gleitring kann eine besonders formfeste Verbindung zwischen Stabilisierungsring und Gleitring gewährleistet sein, insbesondere eine besonders gute formschlüssige Verbindung. Die Ausnehmungen können beispielsweise durch eine Reduzierung der Dicke des jeweiligen Rings oder durch Vorsehen einer in einer Richtung durch den jeweiligen Ring durchlaufende Aussparung in dem jeweiligen Ring ausgebildet sein. Besonders bevorzugt erstrecken sich die Vorsprünge des Gleitrings gemeinsam über mindestens 30% der axialen Erstreckungslänge des Gleitrings. Somit sind zumindest 30% der axialen Erstreckung des Gleitrings durch seine Vorsprünge gebildet. Entsprechend erstrecken sich bevorzugt die Vorsprünge und Ausnehmungen des Gleitrings über mindestens 30% der axialen Erstreckungslänge des Gleitrings, da die Ausnehmungen senkrecht zur axialen Richtung zwischen den Vorsprüngen ausgebildet sind. Bevorzugt erstrecken sich die Vorsprünge des Stabilisierungsrings über mindestens 30% der axialen Erstreckungslänge des Stabilisierungsrings. Somit sind zumindest 30% der axialen Erstreckung des

Stabilisierungsrings durch seine Vorsprünge gebildet. Entsprechend strecken sich bevorzugt die Vorsprünge und Ausnehmungen, die senkrecht zur axialen Richtung zwischen den Vorsprüngen ausgebildet sind, über mindestens 30% der axialen Erstreckungslänge des Stabilisierungsrings. Indem sich die Vorsprünge des Stabilisierungsrings und/oder des Gleitrings über mindestens 30% seiner axialen Erstreckungslänge erstrecken, kann über eine erhebliche axiale Erstreckung hinweg eine formfeste Verbindung zwischen Stabilisierungsring und Gleitring gewährleistet sein. Besonders bevorzugt sind die Vorsprünge und Ausnehmungen zumindest über 50% ihrer axialen Erstreckungslänge, insbesondere zumindest 70% ihrer axialen Erstreckungslänge außerhalb der axialen Erstreckung der Wälzkörper vorgesehen. Hierdurch kann ein Einfluss des Ineinandergreifens von Vorsprüngen und Ausnehmungen auf die Lagerung der Wälzkörper möglichst gering gehalten sein.

In einer Ausführungsform sind zumindest einige der Vorsprünge von Stabilisierungsring und Gleitring als radiale Vorsprünge und einige der Ausnehmungen von Stabilisierungsring und Gleitring als radiale Ausnehmungen ausgebildet, wobei jeweils einer der radialen Vorsprünge des Stabilisierungsrings in jeweils einer der radialen Ausnehmungen des Gleitrings und jeweils einer der radialen Vorsprünge des Gleitrings in jeweils einer der radialen Ausnehmungen des Stabilisierungsrings angeordnet ist. Durch das Ineinandergreifen von radialen Vorsprüngen und Ausnehmungen kann eine Verdrehung von Stabilisierungsring und Gleitring zueinander besonders effektiv verhindert sein. In einer besonders bevorzugten Ausführungsform sind die radialen Vorsprünge des Gleitrings breiter als die radialen Vorsprünge des Stabilisierungsrings, was für die Stabilität des Lagerrings und somit von Stabilisierungsring und Gleitring besonders vorteilhaft sein kann.

In einer Ausführungsform weisen zumindest einige der radialen Vorsprünge jeweils eine sich entlang ihrer radialen Erstreckung in die ihnen jeweils zugeordnete radiale Aufnahme hinein vergrößernde Breite auf unter Ausbildung eines Hinterschnitts. Die zugeordnete radiale Aufnahme ist die Aufnahme, in der der jeweilige radiale Vorsprung angeordnet ist. Indem sich die radialen Vorsprünge entlang ihrer radialen Erstreckung in die ihnen zugeordnete radiale Aufnahme hinein verbreitern, bilden sie einen Hinterschnitt aus, der in radialer Richtung wirkt, sodass die radialen Vorsprünge aufgrund des Hinterschnitts sich nicht radial aus der zugeordneten radialen Aufnahme hinaus bewegen können, was für die Stabilität des Lagerrings besonders vorteilhaft ist.

In einer Ausführungsform weisen Stabilisierungsring und Gleitring jeweils eine erste Gruppe und eine zweite Gruppe an Vorsprüngen auf, wobei die beiden Gruppen an Vorsprüngen an gegenüberliegenden axialen Enden des Stabilisierungsrings bzw. Gleitrings vorgesehen sind. Bevorzugt sind die Wälzkörper axial zwischen den beiden Gruppen an Vorsprüngen angeordnet. Dabei erstrecken sich die Wälzkörper bevorzugt mit mindestens 50%, insbesondere mindestens 70% ihrer axialen Erstreckung außerhalb des axialen Bereichs, in dem die Vorsprünge angeordnet sind. Besonders bevorzugt sind die Vorsprünge der ersten Gruppe als axiale Vorsprünge und die Vorsprünge der zweiten Gruppe als radiale Vorsprünge ausgebildet. Besonders bevorzugt ist jeweils ein Vorsprung der ersten Gruppe innerhalb eines selben Winkelbereichs um die Achse angeordnet wie ein zugeordneter Vorsprung der zweiten Gruppe. Durch das Vorsehen der zwei Gruppen an Vorsprüngen kann die Verbindung zwischen Stabilisierungsring und Gleitring besonders begünstigt sein. Indem die Vorsprünge der beiden Gruppen jeweils in einem selben Winkelbereich angeordnet sind, kann die Zusammenfügbarkeit von Stabilisierungsring und Gleitring und deren Stabilität besonders begünstigt sein.

In einer Ausführungsform weist der Gleitring eine größere über seinen Umlauf um die Achse gemittelte Erstreckungslänge in radialer Richtung auf als der Stabilisierungsring. Dabei ist abgestellt auf die radiale Erstreckungslänge, d. h. radiale Dicke, gemittelt über den gesamten Umlauf um die Achse und gemittelt über einen selben axialen Abschnitt, wobei der Abschnitt mindestens 50% der axialen Erstreckungslänge von Stabilisierungsring und Gleitring, insbesondere 100% der axialen Erstreckungslänge von zumindest einem von Stabilisierungsring und Gleitring umfasst. Bevorzugt ist die radiale Erstreckungslänge, d. h. radiale Dicke, gemittelt über den gesamten Umlauf um die Achse und über die gesamte axiale Erstreckungslänge von jeweils Stabilisierungsring und Gleitring. Die Erfinder haben erkannt, dass für eine zuverlässige und reibungsarme Lagerung bzw. Führung der Wälzkörper das Vorsehen eines hinreichend radial dicken Gleitrings besonders vorteilhaft ist, wohingegen in vielen Anwendungsfällen bereits ein Stabilisierungsring mit geringer Dicke für eine hinreichende Stabilität ausreicht, da der Stabilisierungsring aus einem Kunststoff mit hoher Härte hergestellt ist.

In einer Ausführungsform hintergreifen die Führungsabschnitte jeweils die Wälzkörper an ihren beiden axialen Seiten. Die Führungsabschnitte bilden somit bevorzugt eine Rille aus, in der die Wälzkörper geführt sind. Dies hat sich bei dem Vorsehen von Kugeln als Wälzkörper als besonders vorteilhaft herausgestellt. Durch das Hintergreifen der Wälzkörper an ihren beiden axialen Seiten können mittels der Wälzkörper die Lagerringe und die Wälzkörper zueinander geführt sein. Besonders bevorzugt weisen die Führungsabschnitte jeweils einen kreisabschnittförmigen Querschnitt auf, mit dem sie um die Achse umlaufen, sodass sie mit ihrem um die Achse umlaufenden kreisabschnittförmigen Querschnitt eine Oberfläche ausbilden, an der die Wälzkörper abrollen können. Dies ist insbesondere bei dem Vorsehen von Kugeln als Wälzkörper besonders vorteilhaft. Besonders bevorzugt sind durch das Hintergreifen der Wälzkörper an beiden axialen Seiten durch beide Führungsabschnitte die Lagerringe in ihrer axialen Position zueinander festgelegt.

In einer Ausführungsform grenzt zumindest einer der Führungsabschnitte mit einem seiner axialen Enden an einen Einführabschnitt mit einer Einführschräge an. Besonders bevorzugt grenzen beide Führungsabschnitte an einem selben ihrer axialen Enden an einen Einführabschnitt mit einer Einführschräge an, sodass die Einführschrägen der Einführabschnitte, die von dem jeweiligen Lagerring umfasst sind, der den jeweiligen Führungsabschnitt ausbildet, sich radial gegenüberliegen. Das Vorsehen eines solchen Einführabschnitts mit einer Einführschräge ist für das Zusammenfügen der Lagerringe und der Wälzkörper besonders vorteilhaft. Besonders bevorzugt weist der den Führungsabschnitt aufweisende Lagerring einen sich über den Verlauf des Einführabschnitts entlang der Achse hinweg vergrößernden Außendurchmesser oder einen sich über den Verlauf des Einführabschnitt entlang der Achse hinweg verkleinernden Innendurchmesser auf. Bevorzugt bildet der Außenring einen Führungsabschnitt aus, der an einem seiner axialen Enden an einen Einführabschnitt mit einer Einführschräge angrenzt, wobei der Außenring einen sich über den Verlauf des Einführabschnitts entlang der Achse verkleinernden Innendurchmesser aufweist. Dabei verkleinert sich der Innendurchmesser von einem axialen Ende des Außenrings ausgehend zu dem Führungsabschnitt hin. Besonders bevorzugt bildet der Innenring einen Führungsabschnitt aus, der an einem seiner axialen Enden an einen Einführabschnitt mit einer Einführschräge angrenzt, wobei der Innenring einen sich über den Verlauf des Einführabschnitts entlang der Achse vergrößernden Außendurchmesser aufweist, wobei sich der Außendurchmesser ausgehend von einem axialen Ende des Innenrings zum Führungsabschnitt hin vergrößert. Während die Wälzkörper in dem bestimmungsgemäßen Betriebszustand des Wälzlagers an dem Führungsabschnitt und nicht an dem Einführabschnitt anliegen, können die Wälzkörper an dem Einführabschnitt entlang zu dem Führungsabschnitt geführt werden, wenn das Wälzlager umfassend Innenring, Außenring und Wälzkörper zusammengebaut wird. Bevorzugt sind Führungsabschnitt und Einführabschnitt jeweils durch den Gleitring des jeweiligen Lagerrings ausgebildet.

In einer Ausführungsform sind Gleitring und Stabilisierungsring in radialer Presspassung miteinander verpresst angeordnet. In einer Ausführungsform sind Gleitring und Stabilisierungsring, insbesondere der Lagerring insgesamt, durch Spritzgussverfahren hergestellt. Besonders bevorzugt sind Gleitring und Stabilisierungsring durch einen Mehrkomponenten-Spritzgussverfahren hergestellt oder ist einer von Gleitring und Stabilisierungsring an den anderen von Gleitring und Stabilisierungsring angespritzt. Bei der Herstellung durch Mehrkomponenten-Spritzgussverfahren können Gleitring und Stabilisierungsring gleichzeitig hergestellt werden, wobei für die beiden Ringe ein jeweils anderer Kunststoff verwendet wird. Bei der Herstellung dadurch, dass der Gleitring an den Stabilisierungsring oder der Stabilisierungsring an den Gleitring angespritzt wird, wird zunächst einer von Gleitring und Stabilisierungsring hergestellt und anschließend der andere durch Anspritzen an den einen hergestellt.

In einer Ausführungsform weist zumindest einer der Lagerringe, insbesondere zumindest der Innenring, einen Flansch auf, der sich radial entlang der Wälzkörper erstreckt und der die Wälzkörper an einer ihrer axialen Seiten verdeckt. Durch einen solchen Flansch können die Wälzkörper geschützt sein, wodurch der Eintritt von Reibung bzw. sonstigen Schädigungen verursachenden Partikeln zumindest verringert werden kann. Besonders bevorzugt ist der Flansch durch den Stabilisierungsring ausgebildet. Besonders bevorzugt liegt der Flansch an dem Gleitring des anderen der Lagerringe um die Achse umlaufend in Gleitanlage an. Indem beide Lagerringe jeweils einen Gleitring und einen Stabilisierungsring aufweisen und der Stabilisierungsring, der den Flansch ausbildet, an dem Gleitring des anderen der Lagerringe anliegt, kann zum einen aufgrund der Anlage des Flanschs an dem Gleitring eine möglichst gute Abdichtung und somit ein möglichst guter Schutz der Wälzkörper bzw. der Führung mit den darin angeordneten Wälzkörpern ermöglicht sein, zu anderen kann hierdurch eine Reibung zwischen den Lagerringen möglichst gering gehalten sein. Besonders bevorzugt sind in dem Flansch um die Achse verteilt Aussparungen vorgesehen, wobei entweder der Flansch durch den Stabilisierungsring ausgebildet ist und sich der Gleitring mit einem Abschnitt in die Aussparungen hinein erstreckt oder der Flansch durch den Gleitring ausgebildet ist und sich der Stabilisierungsring in die Aussparungen hinein erstreckt. Durch das Hineinerstrecken des jeweils anderen Rings in die Aussparungen des Flanschs kann besonders vorteilhaft eine formfeste Verbindung zwischen Stabilisierungsring und Gleitring sichergestellt sein. Bevorzugt erstreckt sich der jeweilige Ring (Stabilisierungsring bzw. Gleitring, der den Flansch nicht aufweist) mit seinen oben erläuterten Vorsprüngen in die Aussparungen hinein.

In einer Ausführungsform weist der Innenring an seiner radialen Innenseite und/oder der Außenring an seiner radialen Außenseite einen abragenden Vorsprung auf zum rotationsfesten Eingreifen in ein erstes Bauteil, das durch das Wälzlager drehbar zu einem zweiten Bauteil gelagert ist. Das erste Bauteil ist dabei rotationsfest zum Innenring oder dem Außenring fixiert, wobei der abragende Vorsprung des Innenrings bzw. des Außenrings in einer in dem ersten Bauteil vorgesehenen Aufnahme angeordnet ist. Das zweite Bauteil ist an dem jeweils anderen Innenring bzw. Außenring rotationsfest montiert. Entsprechend sind die beiden Bauteile durch das Wälzlager zueinander drehbar gelagert, wobei jeder von Innenring und Außenring an jeweils einem der beiden Bauteile rotationsfest fixiert ist. Bevorzugt ist eines der Bauteile in radialer Presspassung von dem Innenring umschlossen mit diesem verpresst und das andere der Bauteile in radialer Presspassung außen um den Außenring umlaufend mit diesem verpresst.

In einer Ausführungsform weist der Innenring an seiner radialen Innenseite eine Aufnahme um Aufnehmen einer Welle auf, wobei die Aufnahme einen Durchmesser von mindestens 8mm, insbesondere mindestens 1cm, insbesondere mindestens 5cm aufweist. Bevorzugt weist der Außenring einen Außendurchmesser auf, der um weniger als 4cm, insbesondere um weniger als 3cm, insbesondere um mindestens 1cm größer ist als der Durchmesser der Aufnahme des Innenrings.

Die Erfindung betrifft ferner eine Vorrichtung umfassend ein äußeres Bauteil, insbesondere ein Rahmenteil oder Getriebeteil, ein inneres Bauteil, insbesondere eine Welle oder ein weiteres Getriebeteil, sowie ein erfindungsgemäßes Wälzlager. Der Innenring ist mit dem inneren Bauteil und der Außenring mit dem äußeren Bauteil jeweils drehfest verbunden, insbesondere in Presspassung mit diesem verbunden. Die Bauteile sind durch das Wälzlager drehbar miteinander verbunden und dabei aufgrund der Eigenschaften des erfindungsgemäßen Wälzlagers möglichst reibungsarm um die Achse des Wälzlagers gegeneinander drehbar gelagert. Besonders bevorzugt ist die Vorrichtung ein Fahrrad. In einer Ausführungsform ist das äußere Bauteil ein Fahrradrahmen, insbesondere eine Radgabel des Fahrradrahmens, wobei das innere Bauteil eine Radachse oder eine Tretlagerachse ist. In einer Ausführungsform ist das äußere Bauteil ein Getriebeteil eines Fahrradgetriebes des Fahrrads und das innere Bauteil ein weiteres Getriebeteil des Fahrradgetriebes. Beispielsweise kann das Fahrradgetriebe ein Tretlagergetriebe sein, wobei durch das Wälzlager zwei Getriebeteile des Tretlagergetriebes gegeneinander drehbar gelagert sind. Beispielsweise kann das Tretlagergetriebe als Getriebeteile mehrere Zahnräder, insbesondere ein Sonnenrad, ein Hohlrad und wenigstens ein Planetenrad aufweisen sowie eine Stegwelle mit mindestens einer Umlaufachse für das Planetenrad, wobei zumindest eine der genannten Getriebeteile, d. h. beispielsweise das Sonnenrad, das Hohlrad, das zumindest eine Planetenrad und/oder die Stegwelle, durch das Wälzlager drehbar an einem anderen der Getriebeteile gelagert ist.

Die Erfindung wird nachfolgend unter Bezugnahme auf acht Figuren anhand von Ausführungsbeispielen näher erläutert.

Es zeigt:
- Figur 1:: In verschiedenen schematischen Prinzipdarstellungen eine Ausführungsform eines erfindungsgemäßen Wälzlagers;
- Figur 2:: In verschiedenen schematischen Prinzipdarstellungen den Außenring des Wälzlagers gemäß Figur 1;
- Figur 3:: In verschiedenen schematischen Prinzipdarstellungen den Innenring des Wälzlagers gemäß Figur 1;
- Figur 4:: In verschiedenen schematischen Prinzipdarstellungen eine weitere Ausführungsform des erfindungsgemäßen Wälzlagers;
- Figur 5:: In verschiedenen schematischen Prinzipdarstellungen den Außenring des Wälzlagers gemäß Figur 4;
- Figur 6:: In verschiedenen schematischen Prinzipdarstellungen den Innenring des Wälzlagers gemäß Figur 4;
- Figur 7:: In einer schematischen Prinzipdarstellungen einen Lagerkäfig einer Ausführungsform des erfindungsgemäßen Wälzlagers;
- Figur 8:: In verschiedenen schematischen Prinzipdarstellungen eine weitere Ausführungsform eines erfindungsgemäßen Wälzlagers.

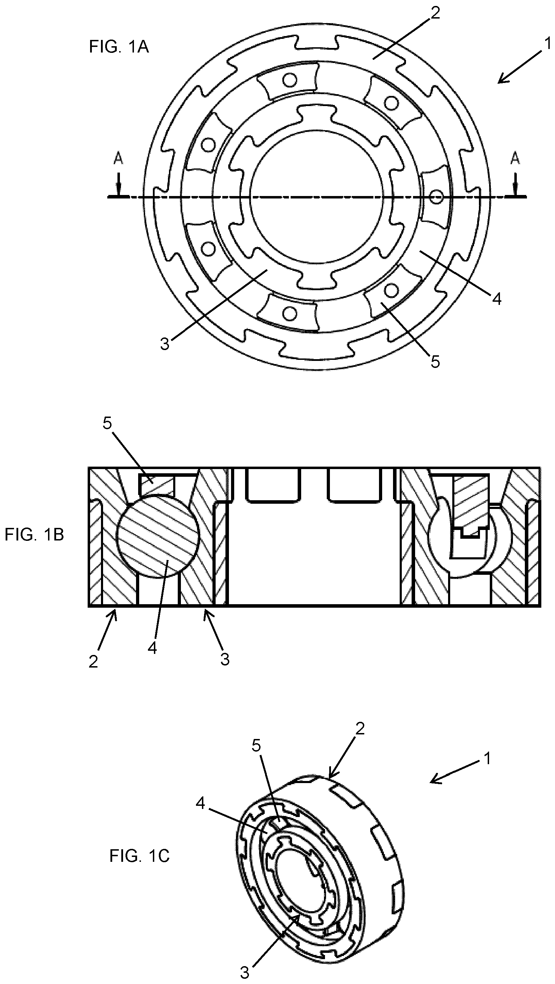

In Figur 1 umfassend die Figuren 1A, 1B und 1C ist eine Ausführungsform eines erfindungsgemäßen Wälzlagers 1 in verschiedenen Prinzipdarstellungen schematisch dargestellt. Figur 1A zeigt eine Aufsicht auf das Wälzlager 1 entlang der axialen Richtung. Figur 1B zeigt eine Querschnittsdarstellung gemäß Schnitt A-A. Figur 1C zeigt eine perspektivische Ansicht. Das Wälzlager 1 gemäß der in Figur 1 gezeigten Ausführungsform weist als zwei Lagerringe einen Innenring 3 und einen Außenring 2 auf. Der Innenring 3 ist radial innerhalb des Außenrings 2 angeordnet. Die beiden Lagerringe bilden jeweils einen Führungsabschnitt aus, wobei die Führungsabschnitte gemeinsam eine Führung für Wälzkörper 4, die vorliegend als Kugeln ausgebildet sind, ausbilden. Die Führungsabschnitte von Innenring 3 und Außenring 2 weisen in radialer Richtung zueinander und liegen sich somit in radialer Richtung gegenüber, wie insbesondere aus Figur 1B zu erkennen ist. Die Wälzkörper 4 sind an den Führungsabschnitten anliegend zwischen Innenring 3 und Außenring 2 gehalten. Ferner weist das Wälzlager 1 einen Lagerkäfig 5 auf, der die Kugeln bzw. Wälzkörper 4 abschnittsweise umgreifend radial zwischen Innenring 3 und Außenring 2 angeordnet ist und dafür sorgt, dass die Wälzkörper 4 bzw. Kugeln in einem gleichmäßigen Winkelabstand zueinander positioniert sind.

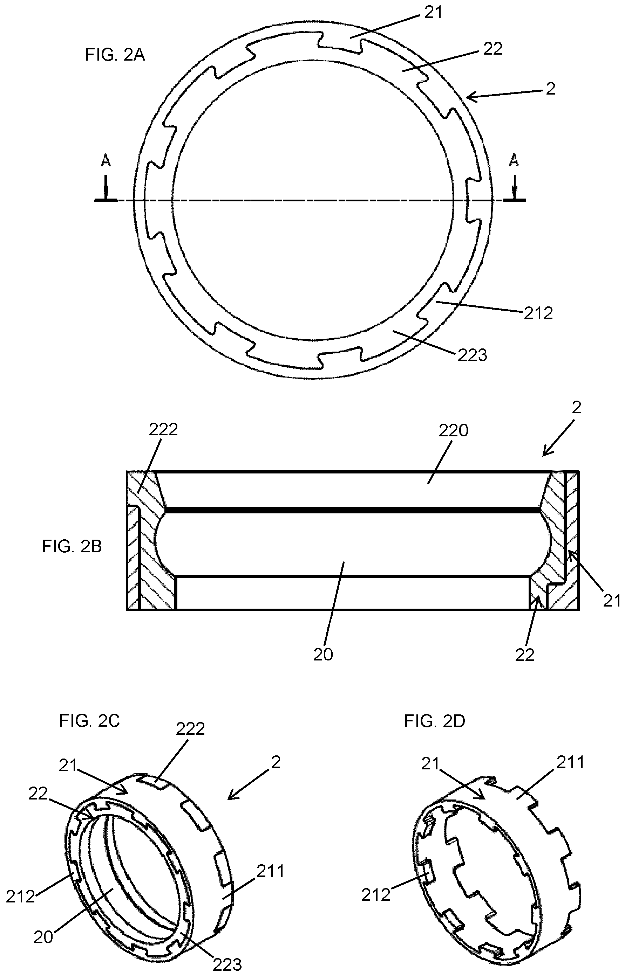

In Figur 2 umfassend die Figuren 2A, 2B, 2C und 2D sind verschiedene Ansichten auf den Außenring 2 bzw. Bestandteile des Außenrings 2 in verschiedenen Prinzipdarstellungen schematisch dargestellt. Der Außenring 2 umfasst einen Gleitring 22 und einen Stabilisierungsring 21. Der Gleitring 22 ist vorliegend aus einem Gleitwerkstoff, vorliegend einem Tribopolymer, hergestellt. Der Gleitring 22 bildet bevorzugt mindestens 50%, insbesondere zumindest 70%, insbesondere den überwiegenden Teil, bevorzugt die gesamte radiale Innenseite des Außenrings 2 aus, was erfindungsgemäß allgemein vorteilhaft ist. Der Gleitring 22 bildet den Führungsabschnitt 20 des Außenrings 2 aus, wobei der Führungsabschnitt die Wälzkörper 4 an ihren beiden axialen Seiten hintergreift und einen kreisabschnittsförmigen Querschnitt aufweist. Der Querschnitt ist ein Querschnitt senkrecht zu seinem Umlauf um die Achse. Der Führungsabschnitt 20 grenzt ferner direkt an einen Einführabschnitt 220 an. In diesem Einführabschnitt weist der Gleitring 22 eine Einführschräge auf. Innerhalb dieser Einführschräge weist der Außenring 2 einen sich entlang der Achse verkleinernden Innendurchmesser, ausgehend von seinem axialen Ende zum Führungsabschnitts 20 hin, auf. Der Führungsabschnitt 20 ist dazu geeignet, die Wälzkörper 4, die vorliegend als Kugeln ausgebildet sind, zuverlässig zu führen, wohingegen der Einführabschnitt 220 zum einfachen Einführen der Kugeln in den Führungsabschnitt 20 während des Zusammenbaus des Wälzlager 1 dient. Gleitring 22 und Stabilisierungsring 21 weisen ferner mehrere Vorsprünge 211, 212, 222, 223 auf. Jeweils einer der Vorsprünge 211, 212 des Stabilisierungsring 21 ist jeweils in einer zugeordneten Ausnehmung das Gleitrings 22 aufgenommen, wobei die Ausnehmung gebildet ist zwischen zwei benachbarten Vorsprüngen 222, 223 des Gleitrings 22. Mit benachbarten Vorsprüngen ist dabei jeweils eine Benachbarung entlang des Umlaufs um die Achse gemeint. Insbesondere aus der Zusammenschau der Figuren 2A und 2C ist zu erkennen, dass der Stabilisierungsring 21 und der Gleitring 22 jeweils radiale Vorsprünge 212, 223 aufweisen, wobei die radialen Vorsprünge 223 des Gleitrings 22 breiter sind als die radialen Vorsprünge 212 des Stabilisierungrings 21 und wobei die radialen Vorsprünge 212, 223 jeweils eine sich entlang ihrer radialen Erstreckung in die ihnen jeweils zugeordnete radiale Aufnahme hinein vergrößernde Breite aufweisen unter Ausbildung eines Hinterschnitts. Diese Hinterschnitte sind in Figur 2A gut zu erkennen. Es ist zu erkennen, dass aufgrund dieser Hinterschnitte eine radiale Relativbewegung von Gleitring 22 und Stabilisierungsring 21 effektiv verhindert ist. Bei dem beschriebenen Ausführungsbeispiel weisen Stabilisierungsring 21 und Gleitring 22 jeweils zwei Gruppen an Vorsprüngen auf. Eine erste Gruppe an Vorsprüngen 222, 211 ist einem ersten axialen Ende des jeweiligen Rings vorgesehen, eine zweite Gruppe an Vorsprüngen 212, 223 ist an einem zweiten axialen Ende des jeweiligen Rings vorgesehen. Der Führungsabschnitt 20 und die Wälzkörper erstrecken sich mit ihrer axialen Erstreckung im Wesentlichen außerhalb der axialen Erstreckung der Vorsprünge. Durch das Zusammenwirken der Vorsprünge 211, 212, 222, 223 sind Gleitring und Stabilisierungsring radial und axial formschlüssig miteinander verbunden. Dabei ist ca. 30% der axialen Erstreckungslänge der Ringe durch die Vorsprünge 211, 212, 222, 223 gebildet.

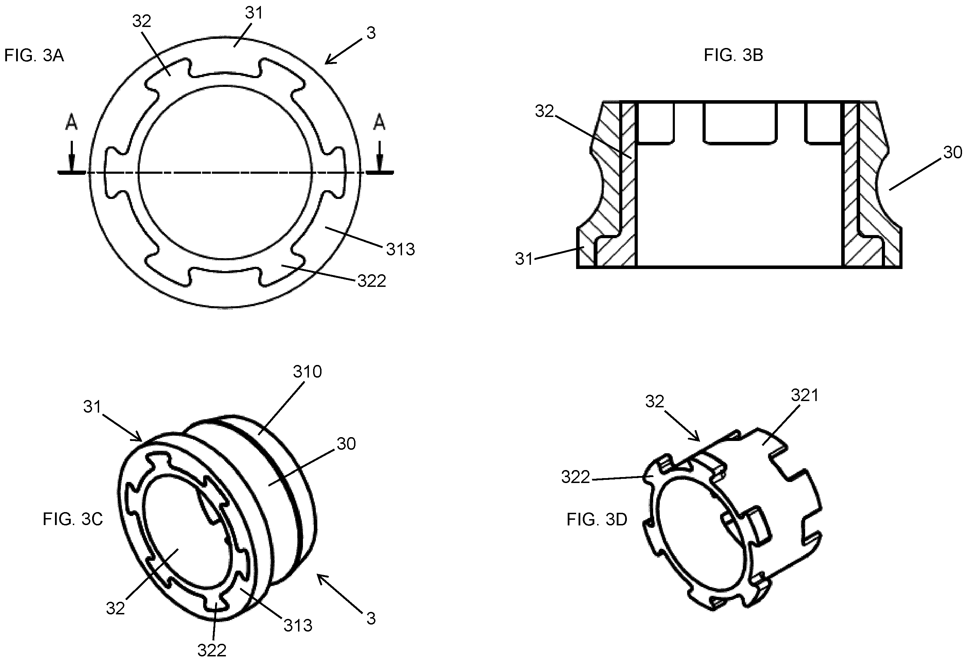

In Figur 3 umfassend die Figuren 3A, 3B, 3C und 3D ist der Innenring 3 bzw. Komponenten des Innenrings 3 in verschiedenen Ansichten in schematischen Prinzipdarstellungen gezeigt. Der Innenring 3 weist einen Stabilisierungsring 32 und einen Gleitring 31 auf. Der Gleitring 31 umschließt den Stabilisierungsring 32 umlaufend. Der Stabilisierungsring 32 bildet dabei eine Aufnahme zum Aufnehmen einer Welle aus. Da der Stabilisierungsring 32 aus einem harten zweiten Kunststoff hergestellt ist, ist er zur Anlage in Presspassung auf einer Welle geeignet ausgebildet. Analog wie zu dem Außenring 2 unter Bezugnahme auf Figur 2 oben erläutert, weisen der Stabilisierungsring 32 und der Gleitring 31 jeweils Vorsprünge 313, 321, 322 auf, die, wie betreffend den Außenring 2 zu Figur 2 erläutert, ineinandergreifen, d.h. dass jeweils einer der Vorsprünge in eine zwischen den Vorsprüngen des anderen Rings ausgebildete, ihm zugeordnete Ausnehmung eingreift. Der Gleitring 31 bildet bevorzugt zumindest 50%, insbesondere zumindest 70%, insbesondere zumindest den überwiegenden Teil, bevorzugt die gesamte radiale Außenseite des Innenrings 3 aus, was erfindungsgemäß allgemein vorteilhaft ist. An dieser radialen Außenseite bildet der Gleitring 31 den Führungsabschnitt 30 des Innenrings 3 aus, der im Wälzlager 1 den Führungsabschnitt 20 des Außenrings 2 radial gegenüberliegt und, analog zu den Führungsabschnitt 20 des Außenrings 2, einen kreisabschnittförmigen Querschnitt aufweist, in dem die Wälzkörper 4, vorliegend Kugeln, mit einem in axialer Richtung wirkenden Hinterschnitt geführt gehalten sind. Der Gleitring 31 bildet ferner einen an den Führungsabschnitt 30 angrenzenden Einführabschnitt 310 aus, in dem sich der Außendurchmesser des Innenrings 3 ausgehend von seinem axialen Ende zum Führungsabschnitt 30 hin kontinuierlich vergrößert, was erfindungsgemäß allgemein vorteilhaft ist. Aus der Zusammenschau der Figuren 1-3 ist zu erkennen, dass sich sowohl die Führungsabschnitte 20, 30 als auch die Einführabschnitte 220, 310 radial gegenüberliegen, wodurch sowohl der Zusammenbau des Wälzlagers 1 als auch die Führung der Wälzkörper 4 in dem zusammengebauten Wälzlager 1 besonders begünstigt ist.

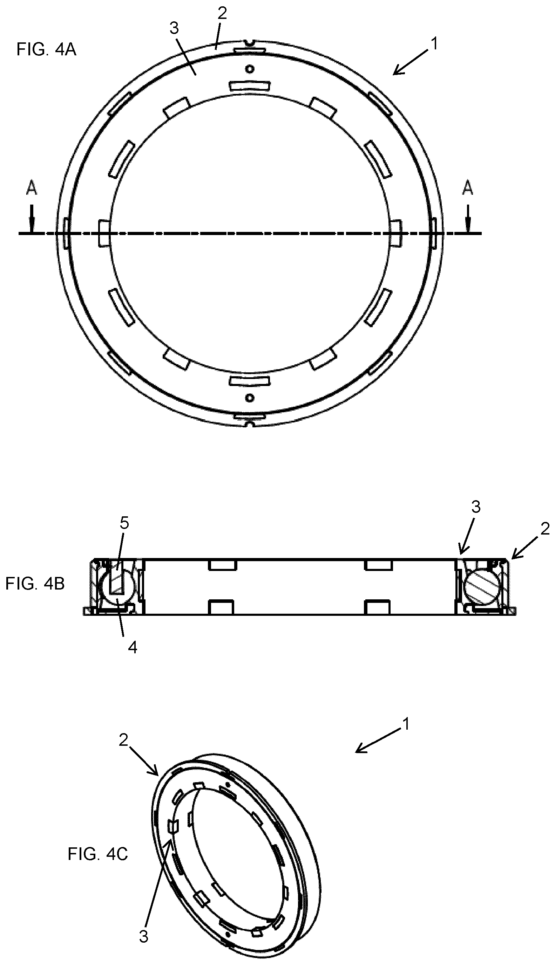

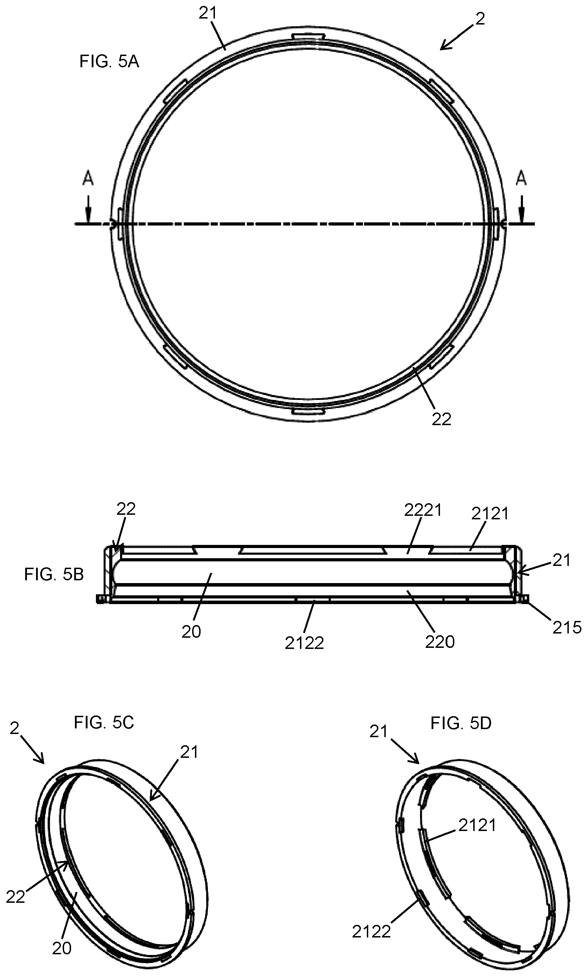

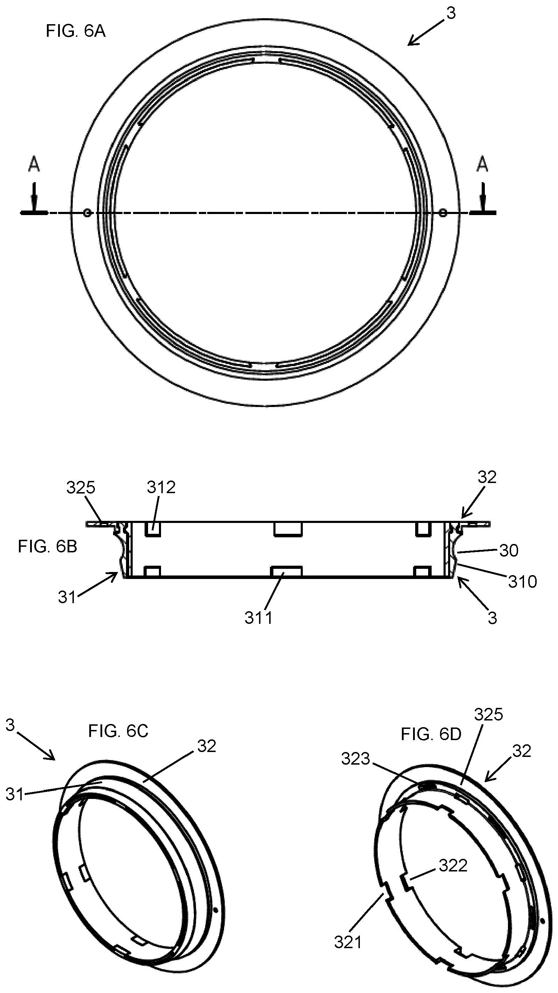

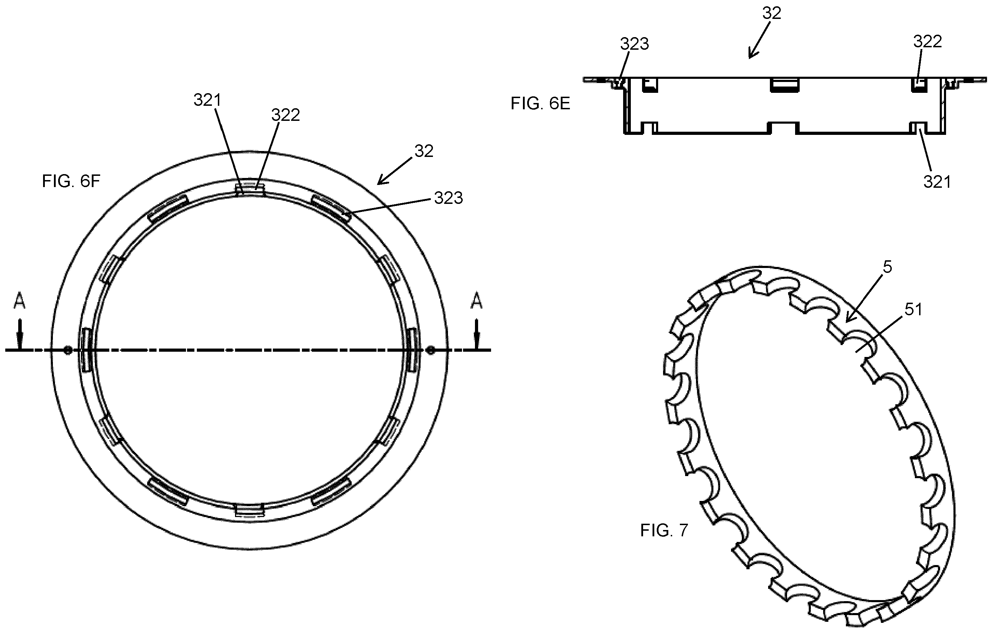

In Figur 4 umfassend die Figuren 4A, 4B und 4C ist eine weitere Ausführungsform eines erfindungsgemäßen Wälzlagers 1 in verschiedenen Prinzipdarstellungen schematisch gezeigt. Figur 4A zeigt eine Aufsicht entlang der axialen Richtung. Figur 4B zeigt einen Querschnitt entlang des Schnitts A-A. Figur 4C zeigt eine Aufsicht auf das Wälzlager 1. Das Wälzlager 1 weist einen Innenring 3 und einen Außenring 2 auf. Radial zwischen Innenring 3 und Außenring 2 sind als Kugeln ausgebildete Wälzkörper 4 angeordnet, die in einem Lagekäfig 5 in einem konstanten Winkelabstand zueinandergehalten sind. Mit Bezug auf vergleichbare Teile des Wälzlagers 1 gemäß Figur 4 wird auf die Erläuterungen zu dem Wälzlager 1 gemäß den Figuren 1-3 verwiesen. Nachfolgend wird lediglich auf die Unterschiede des Wälzlagers gemäß Figur 4 im Vergleich zu dem vorgenannten Wälzlager 1 eingegangen. Dabei wird zusammenfassend auf die Figuren 4-6 eingegangen, die jeweils das in Figur 5 gezeigte Wälzlager betreffen. In Figur 5 umfassend die Figuren 5A, 5B, 5C und 5D ist der Außenring 2 bzw. Bestandteile des Außenrings 2 in verschiedenen Ansichten in Prinzipdarstellungen schematisch dargestellt. Figur 6 umfassend die Figuren 6A, 6B, 6C, 6D, 6E und 6F ist der Innenring 3 bzw. Bestandteile des Innenrings 3 in verschiedenen Ansichten in Prinzipdarstellungen schematisch dargestellt.

Der Außenring 2 weist einen Gleitring 22 auf, der den Führungsabschnitt 20 des Außenring 2 ausbildet, sowie einen Stabilisierungsring 21, der den Gleitring 22 vollständig umschließt, was erfindungsgemäß allgemein vorteilhaft ist.

Der Gleitring 22 bildet die gesamte radiale Innenseite des Außenrings 2 aus, der Stabilisierungsring 21 die gesamte radiale Außenseite des Außenrings 2. Der Stabilisierungsring 21 bildet einen Flansch 215 aus. Dieser Flansch 215 ist radial abragend ausgebildet. Dieser Flansch 215 ist besonders vorteilhaft als Anschlag bei der Montage des Wälzlagers 1 mit seinem Außenring 2 in Presspassung in einem äußeren Bauteil einer Vorrichtung geeignet. Der Innenring 3 weist ebenfalls einen Stabilisierungsring 32 und einen Gleitring 31 auf. Der Gleitring 31 umschließt den Stabilisierungsring 32 vollständig und bildet den überwiegenden Anteil der radialen Außenseite des Innenrings 3 aus, was erfindungsgemäß allgemein vorteilhaft ist. Entsprechend ist erfindungsgemäß allgemein vorteilhaft, dass der Gleitring 22 des Außenrings 2 den überwiegenden Anteil der radialen Innenseite des Außenrings 2 ausbildet. Der Gleitring 31 des Innenrings 3 und der Gleitring 22 des Außenrings 2 bilden den Führungsabschnitt 30, 20 des Innenrings 3 bzw. Außenrings 2 aus, der jeweils an einen Einführabschnitt 310, 220 angrenzt. Die Führungsabschnitte 20, 30 und Einführabschnitte 220, 310 liegen einander radial gegenüber. Der Stabilisierungsring 32 des Innenrings 3 bildet einen radial abtragenden Flansch 325 aus. Insbesondere aus der Zusammenschau der Figuren 4-6 ist zu erkennen, dass dieser Flansch 315 die Wälzkörper 4 an einer ihrer axialen Seiten radial bedeckt. Der Flansch 325 liegt dabei an dem Gleitring 22 des Außenrings 2 in Gleitanlage an, wodurch zum einen eine geringe Reibung und zum anderen ein zuverlässiger Schutz der Wälzkörper 4 gewährleistet ist. In dem Flansch 325 sind Aussparungen 323 vorgesehen, durch die sich der Gleitring 30 des Innenrings 3 hindurch erstreckt. Hierdurch ist ein besonders guter Formschluss zwischen Gleitring 31 und Stabilisierungsring 32 des Innenrings 3 gewährleistet. Darüber hinaus weist der Stabilisierungsring 32 an seinen beiden axialen Enden jeweils eine Gruppe an Vorsprüngen auf, wobei jeweils zwei benachbarte dieser Vorsprünge zwischen sich eine Ausnehmung 321, 322 ausbilden. In diesen Ausnehmungen 321, 322 ist jeweils ein von dem Gleitring 31 ausgebildeter Vorsprung 311, 312 angeordnet. Entsprechend weisen Gleitring 22 und Stabilisierungsring 21 des Außenrings ineinandergreifende Vorsprünge 2121, 2122, 2221 auf.

In Figur 7 ist ein Lagerkäfig 5 einer Ausführungsform des erfindungsgemäßen Wälzlagers 1 in einer Prinzipdarstellung dargestellt. Der Lagerkäfig 5 ist, was erfindungsgemäß allgemein vorteilhaft ist, als um die Achse umlaufender geschlossener Ring ausgebildet, der eine Mehrzahl an Wälzkörperaufnahmen 51 aufweist, die jeweils in einem selben Winkelabstand, bezogen auf eine Drehung um die Achse, voneinander beabstandet sind. Diese Wälzkörperaufnahmen 51 sind dazu ausgebildet, als Kugeln ausgebildete Wälzkörper 4 so aufzunehmen, dass sie diese über mehr als die Hälfte ihres Umfangs umgreifen, was erfindungsgemäß allgemein vorteilhaft ist. Dadurch ist eine besonders gute Fixierung der Kugeln zueinander mittels des Lagerkäfigs 5 gewährleistet.

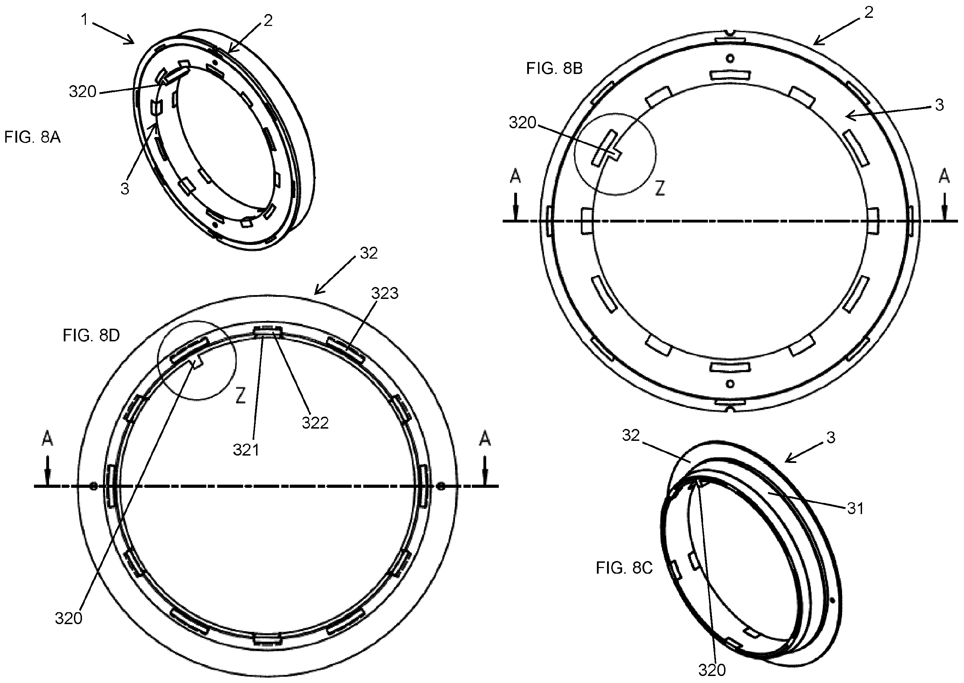

In Figur 8 umfassend die Figuren 8A, 8B, 8C und 8D ist eine weitere Ausführungsform eines erfindungsgemäßen Wälzlagers bzw. von Bestandteilen des erfindungsgemäßen Wälzlagers, in verschiedenen Ansichten in Prinzipdarstellungen schematisch dargestellt. Nachfolgend wird lediglich auf die Unterschiede im Vergleich zum Ausführungsbeispiel, das in den Figuren 4-6 dargestellt ist, eingegangen. Das Wälzlager 1 gemäß Figur 8 weist einen Außenring 2 und einen Innenring 3 auf, die weitestgehend analog wie Außenring 2 bzw. Innenring 3 des Ausführungsbeispiels gemäß den Figuren 4-6 ausgebildet sind.

Allerdings weist der Stabilisierungsring 32 des Innenrings 3 an seiner radialen Innenseite einen radial abragenden Vorsprung 320 auf. Dieser radial abragende Vorsprung 320 verläuft über allgemein vorteilhaft über mindestens 50 % der axialen Erstreckungslänge des Innenrings 3, vorliegend über dessen gesamte axiale Erstreckungslänge. Indem der abragende Vorsprung 320 von dem Stabilisierungsring 32 ausgebildet ist und radial nach innen von dessen Innenseite abragt, kann der abragende Vorsprung 320 besonders vorteilhaft für eine drehfeste Montage des Innenrings 3 des Wälzlagers 1 an einem inneren Bauteil einer Vorrichtung geeignet sein, das eine zu dem abragenden Vorsprung 320 korrespondierende Aufnahme aufweist.

### Bezugszeichenliste

- 1: Wälzlager
- 2: Außenring
- 3: Innenring
- 4: Wälzkörper
- 5: Lagerkäfig
- 20: Führungsabschnitt
- 21: Stabilisierungsring
- 22: Gleitring
- 30: Führungsabschnitt
- 31: Gleitring
- 32: Stabilisierungsring
- 220: Einführabschnitt
- 211: Vorsprung
- 212: Vorsprung
- 215: Flansch
- 222: Vorsprung
- 223: Vorsprung
- 310: Einführabschnitt
- 311: Vorsprung
- 312: Vorsprung
- 313: Vorsprung
- 321: Vorsprung
- 322: Vorsprung
- 323: Vorsprung
- 325: Flansch
- 2121: Vorsprung
- 2122: Vorsprung
- 2222: Vorsprung

## Patentansprüche

1. Wälzlager, insbesondere Kugellager, umfassend als zwei um eine Achse zueinander drehbar gelagerte Lagerringe einen Innenring und einen Außenring, die jeweils einen um die Achse umlaufenden Führungsabschnitt einer zwischen den Lagerringen vorgesehenen Führung ausbilden, wobei der von dem Innenring ausgebildete Führungsabschnitt dem von dem Außenring ausgebildeten Führungsabschnitt radial gegenüberliegt und in der Führung Wälzkörper, insbesondere Kugeln, um die Achse verteilt und an beiden Führungsabschnitten anliegend angeordnet sind, so dass bei einer Drehung der Lagerringe zueinander um die Achse die Wälzkörper an beiden Führungsabschnitten abrollen, wobei zumindest einer der Lagerringe einen Gleitring aufweist, der den Führungsabschnitt des Lagerrings ausbildet, sowie einen Stabilisierungsring, der um die Achse umlaufend an dem Gleitring anliegt, **dadurch gekennzeichnet, dass** der Gleitring aus einem ersten Kunststoff und der Stabilisierungsring aus einem zweiten Kunststoff hergestellt sind, wobei der erste Kunststoff weicher ist als der zweite Kunststoff, wobei insbesondere die Wälzkörper schmiermittelfrei in der Führung gelagert sind, und dass der Stabilisierungsring und der Gleitring jeweils um die Achse verteilte Vorsprünge aufweisen, wobei jeweils zwischen zwei benachbarten Vorsprüngen jeweils eine Ausnehmung vorgesehen ist, wobei jeweils einer der Vorsprünge des Stabilisierungsrings in jeweils einer der Ausnehmungen des Gleitrings und jeweils einer der Vorsprünge des Gleitrings in jeweils einer der Ausnehmungen des Stabilisierungsrings angeordnet sind.

2. Wälzlager nach Anspruch 1,
**dadurch gekennzeichnet, dass**
jeder der Lagerringe jeweils einen Gleitring und einen Stabilisierungsring aufweisen, wobei insbesondere der Gleitring des Innenrings den Stabilisierungsring des Innenrings umschließt und wobei der Stabilisierungsring des Außenrings den Gleitring des Außenrings umschließt.

3. Wälzlager nach einem der vorangehenden Ansprüche,
**dadurch gekennzeichnet, dass**
die Wälzkörper an dem Gleitring mit einer mindestens fünfmal so großen Anlagefläche anliegen als an dem Stabilisierungsring, wobei insbesondere der Stabilisierungsring von den Wälzkörpern beabstandet ist.

4. Wälzlager nach einem der vorangehenden Ansprüche,
**dadurch gekennzeichnet, dass**
der erste Kunststoff eine Härte mit einem Shore-D-Wert von weniger als 75, insbesondere weniger als 70, insbesondere weniger als 65 aufweist, und wobei der zweite Kunststoff eine Härte mit einem Shore-D-Wert aufweist, der wenigstens um 5, insbesondere wenigstens um 10, insbesondere wenigstens um 15 größer ist als der Shore-D-Wert des ersten Kunststoffs, insbesondere mindestens 65, insbesondere mindestens 70, insbesondere mindestens 75 beträgt,
und/oder dass
der erste Kunststoff ein Gleitwerkstoff ist.

5. Wälzlager nach einem der vorangehenden Ansprüche,
**dadurch gekennzeichnet, dass**
ein Reibwert zwischen den Wälzkörpern und dem ersten Kunststoff geringer ist als ein Reibwert zwischen den Wälzkörpern und dem zweiten Kunststoff
und/oder dass
der erste Kunststoff einen höheren Anteil an Schmierstoffen enthält als der zweite Kunststoff.

6. Wälzlager nach einem der vorangehenden Ansprüche,
**dadurch gekennzeichnet, dass**
die Wälzkörper in einem um die Achse umlaufenden Lagerkäfig drehbar gelagert mit einem festgelegten Winkelabstand zueinander geführt sind, wobei der Lagerkäfig radial zwischen den Führungsabschnitten von Innenring und Außenring angeordnet ist und insbesondere aus einem Gleitwerkstoff hergestellt ist, wobei insbesondere der Innenring, der Außenring und der Lagerkäfig jeweils aus Kunststoff hergestellt sind.

7. Wälzlager nach einem der vorangehenden Ansprüche,
**dadurch gekennzeichnet, dass**
die Wälzkörper aus einem Material hergestellt ist, das eine größere Härte als der erste Kunststoff und insbesondere als der zweite Kunststoff aufweist, wobei insbesondere die Wälzkörper aus Glas, Metall, einem Kunststoff oder einer Keramik hergestellt sind.

8. Wälzlager nach einem der vorangehenden Ansprüche,
**dadurch gekennzeichnet, dass**
Gleitring und Stabilisierungsring sowohl in einer Richtung entlang der Achse als auch senkrecht zur Achse formschlüssig aneinander anliegen.

9. Wälzlager nach einem der vorangehenden Ansprüche,
**dadurch gekennzeichnet, dass**
sich die Vorsprünge des Gleitrings über mindestens 30 % der axialen Erstreckungslänge des Gleitrings erstecken und die Vorsprünge des Stabilisierungsrings über mindestens 30 % der axialen Erstreckungslänge des Stabilisierungsrings erstrecken.

10. Wälzlager nach einem der vorangehenden Ansprüche,
**dadurch gekennzeichnet, dass**
zumindest einige der Vorsprünge von Stabilisierungsring und Gleitring als radiale Vorsprünge und einige der Ausnehmungen als radiale Ausnehmungen ausgebildet sind, wobei jeweils einer der radialen Vorsprünge des Stabilisierungsrings in jeweils einer der radialen Ausnehmungen des Gleitrings und jeweils einer der radialen Vorsprünge des Gleitrings in jeweils einer der radialen Ausnehmungen des Stabilisierungsrings angeordnet ist, wobei insbesondere die radialen Vorsprünge des Gleitrings breiter als die radialen Vorsprünge des Stabilisierungsrings sind, wobei insbesondere zumindest einige der radialen Vorsprünge jeweils eine sich entlang ihrer radialen Erstreckung in die ihnen jeweils zugeordneten radiale Aufnahme hinein vergrößernde Breite aufweisen unter Ausbildung eines Hinterschnitts.

11. Wälzlager nach einem der vorangehenden Ansprüche,
**dadurch gekennzeichnet, dass**
Stabilisierungsring und Gleitring jeweils eine erste Gruppe und eine zweite Gruppe an Vorsprüngen aufweisen, wobei die beiden Gruppen an Vorsprüngen an gegenüberliegenden axialen Enden des Stabilisierungsrings bzw. Gleitrings vorgesehen sind und die Wälzkörper axial zwischen den beiden Gruppen an Vorsprüngen angeordnet sind und/oder die Vorsprünge der ersten Gruppe als axiale Vorsprünge und die Vorsprünge der zweiten Gruppe als radiale Vorsprünge ausgebildet sind, wobei insbesondere jeweils ein Vorsprung der ersten Gruppe innerhalb eines selben Winkelbereichs um die Achse angeordnet ist wie ein zugeordneter Vorsprung der zweiten Gruppe.

12. Wälzlager nach einem der vorangehenden Ansprüche,
**dadurch gekennzeichnet, dass**
der Gleitring eine größere über einen Umlauf um die Achse gemittelte Erstreckungslänge in radialer Richtung als der Stabilisierungsring aufweist.

13. Wälzlager nach einem der vorangehenden Ansprüche,
**dadurch gekennzeichnet, dass**
die Führungsabschnitte jeweils die Wälzkörper an ihren beiden axialen Seiten hintergreifen, wobei insbesondere die Führungsabschnitt jeweils einen kreisabschnittsförmigen Querschnitt aufweisen, mit dem sie um die Achse umlaufen, wobei insbesondere durch das Hintergreifen der Wälzkörper an beiden axialen Seiten durch beide Führungsabschnitte die Lagerringe in ihrer axialen Position zueinander festgelegt sind,
und/oder dass
zumindest einer der Führungsabschnitte an einem seiner axialen Enden an einen Einführabschnitt mit einer Einführschräge angrenzt, wobei insbesondere der diesen Führungsabschnitt aufweisende Lagerring einen sich über den Verlauf des Einführabschnitts entlang der Achse hinweg vergrößernden Außendurchmesser oder einen sich über den Verlauf des Einführabschnitts entlang der Achse hinweg verkleinernden Innendurchmesser aufweist.

14. Wälzlager nach einem der vorangehenden Ansprüche, **dadurch gekennzeichnet, dass**
Gleitring und Stabilisierungsring in radialer Presspassung miteinander verpresst angeordnet sind und/oder durch Spritzgussverfahren hergestellt sind, wobei insbesondere Gleitring und Stabilisierungsring durch Mehrkomponenten-Spritzgussverfahren hergestellt sind und/oder einer von Gleitring und Stabilisierungsring an den anderen von Gleitring und Stabilisierungsring angespritzt ist.

15. Wälzlager nach einem der vorangehenden Ansprüche, **dadurch gekennzeichnet, dass**
zumindest einer der Lagerringe, insbesondere der Innenring, einen Flansch aufweist, der sich radial entlang der Wälzkörper erstreckt und der die Wälzkörper an einer ihrer axialen Seiten verdeckt, wobei insbesondere der Flansch durch den Stabilisierungsring ausgebildet ist und insbesondere der Flansch an dem Gleitring des anderen der Lagerringe um die Achse umlaufend in Gleitanlage anliegt, wobei insbesondere in dem Flansch um die Achse verteilt Aussparungen vorgesehen sind, wobei entweder der Flansch durch den Stabilisierungsring ausgebildet ist und sich der Gleitring mit einem Abschnitt in die Aussparungen hinein erstreckt oder der Flansch durch den Gleitring ausgebildet ist und sich der Stabilisierungsring in die Aussparungen hinein erstreckt.

16. Wälzlager nach einem der vorangehenden Ansprüche,
**dadurch gekennzeichnet, dass**
der Innenring an seiner radialen Innenseite und/oder der Außenring an seiner radialen Außenseite einen abragenden Vorsprung aufweist zum rotationsfesten Eingreifen in ein erstes Bauteil, das durch das Wälzlager drehbar zu einem zweiten Bauteil gelagert ist,
und/oder dass
der Innenring an seiner radialen Innenseite eine Aufnahme zum Aufnehmen einer Welle aufweist, wobei die Aufnahme einen Durchmesser von mindestens 1 cm, insbesondere mindestens 5 cm aufweist, wobei der Außenring einen Außendurchmesser aufweist, der um weniger als 4 cm, insbesondere weniger als 3 cm, insbesondere mindestens 1 cm größer ist als der Durchmesser der Aufnahme des Innenrings.

17. Vorrichtung umfassend ein äußeres Bauteil, insbesondere ein Rahmenteil oder Getriebeteil, ein inneres Bauteil, insbesondere eine Welle oder ein weiteres Getriebeteil, sowie ein Wälzlager nach einem der vorangehenden Ansprüche, **dadurch gekennzeichnet, dass**
der Innenring mit dem inneren Bauteil und der Außenring mit dem äußeren Bauteil jeweils drehfest, insbesondere in Presspassung, verbunden ist und die Bauteile durch das Wälzlager drehbar miteinander verbunden sind, wobei insbesondere die Vorrichtung ein Fahrrad ist und der äußere Bauteil ein Fahrradrahmen, insbesondere eine Radgabel des Fahrradrahmens, oder ein Getriebeteil eines Fahrradgetriebes des Fahrrads ist und das innere Bauteil eine Radachse, eine Tretlagerachse oder ein weiteres Getriebeteil des Fahrradgetriebes ist.

## Claims

1. Roller bearing, in particular ball bearing, comprising, as two bearing rings which are mounted so as to be rotatable relative to one another about an axis, an inner ring and an outer ring, each forming a guide section, which runs around the axis, of a guide provided between the bearing rings, wherein the guide section formed by the inner ring lies radially opposite the guide section formed by the outer ring, and rolling elements, in particular balls, are arranged in the guide so as to be distributed about the axis and so as to bear against both guide sections, with the result that, when the bearing rings rotate relative to one another about the axis, the rolling elements roll on both guide sections, wherein at least one of the bearing rings has a sliding ring which forms the guide section of the bearing ring, and a stabilizing ring which bears against the sliding ring so as to run around the axis, **characterized in that** the sliding ring is produced from a first plastics material and the stabilizing ring is produced from a second plastics material, wherein the first plastics material is softer than the second plastics material, wherein in particular the rolling elements are mounted in the guide so as to be free from lubricant, and **in that** the stabilizing ring and the sliding ring each comprise projections which are distributed about the axis, wherein one recess is provided between each pair of adjacent projections, wherein a respective one of the projections of the stabilizing ring is arranged in a respective one of the recesses of the sliding ring and a respective one of the projections of the sliding ring is arranged in a respective one of the recesses of the stabilizing ring.

2. Roller bearing according to Claim 1,
**characterized in that**
each of the bearing rings has a respective sliding ring and a stabilizing ring, wherein in particular the sliding ring of the inner ring surrounds the stabilizing ring of the inner ring, and wherein the stabilizing ring of the outer ring surrounds the sliding ring of the outer ring.

3. Roller bearing according to one of the preceding claims, **characterized in that**
the rolling elements bear against the sliding ring with a contact surface which is at least five times as large as against the stabilizing ring, wherein in particular the stabilizing ring is spaced apart from the rolling elements.

4. Roller bearing according to one of the preceding claims, **characterized in that**
the first plastics material has a hardness with a Shore-D value of less than 75, in particular less than 70, in particular less than 65, and wherein the second plastics material has a hardness with a Shore-D value which is at least 5, in particular at least 10, in particular at least 15 greater than the Shore-D value of the first plastics material, in particular at least 65, in particular at least 70, in particular at least 75,
and/or **in that**
the first plastics material is a sliding material.

5. Roller bearing according to one of the preceding claims, **characterized in that**
a coefficient of friction between the rolling elements and the first plastics material is lower than a coefficient of friction between the rolling elements and the second plastics material,
and/or **in that**
the first plastics material contains a higher proportion of lubricants than the second plastics material.

6. Roller bearing according to one of the preceding claims, **characterized in that**
the rolling elements being rotatably retained in a bearing cage extending circumferentially about the axis and being guided at a predetermined angular spacing from one another, wherein the bearing cage is arranged radially between the guide sections of the inner ring and outer ring and is produced in particular from a sliding material, wherein in particular the inner ring, the outer ring and the bearing cage are each produced from plastics material.

7. Roller bearing according to one of the preceding claims, **characterized in that**
the rolling elements are produced from a material which has a greater hardness than the first plastics material and in particular than the second plastics material, wherein in particular the rolling elements are produced from glass, metal, a plastics material or a ceramic.

8. Roller bearing according to one of the preceding claims, **characterized in that**
the sliding ring and the stabilizing ring bear against one another in a form-fitting manner both in a direction along the axis and perpendicularly to the axis.

9. Roller bearing according to one of the preceding claims, **characterized in that**
the projections of the sliding ring extend over at least 30% of the axial extension length of the sliding ring, and the projections of the stabilizing ring extend over at least 30% of the axial extension length of the stabilizing ring.

10. Roller bearing according to one of the preceding claims, **characterized in that**
at least some of the projections of the stabilizing ring and the sliding ring are formed as radial projections and some of the recesses are formed as radial recesses, wherein a respective one of the radial projections of the stabilizing ring is arranged in a respective one of the radial recesses of the sliding ring and a respective one of the radial projections of the sliding ring is arranged in a respective one of the radial recesses of the stabilizing ring, wherein in particular the radial projections of the sliding ring are wider than the radial projections of the stabilizing ring, wherein in particular at least some of the radial projections each have a width which increases along their radial extent into the respective associated radial receptacle, forming an undercut.

11. Roller bearing according to one of the preceding claims, **characterized in that**
the stabilizing ring and the sliding ring each have a first group and a second group of projections, wherein the two groups of projections are provided at opposite axial ends of the stabilizing ring or sliding ring, and the rolling elements are arranged axially between the two groups of projections, and/or the projections of the first group are formed as axial projections and the projections of the second group are formed as radial projections, wherein in particular a respective projection of the first group is arranged within the same angular range about the axis as an associated projection of the second group.

12. Roller bearing according to one of the preceding claims, **characterized in that**
the sliding ring has a greater extension length, averaged over a revolution about the axis, in the radial direction than the stabilizing ring.

13. Roller bearing according to one of the preceding claims, **characterized in that**
the guide sections each engage behind the rolling elements on their two axial sides, wherein in particular the guide sections each have a circular-segment-shaped cross section with which they run around the axis, wherein in particular by virtue of the rolling elements engaging behind on both axial sides by means of both guide sections, the bearing rings are fixed in their axial position relative to one another,
and/or **in that**
at least one of the guide sections adjoins an insertion section with an insertion bevel at one of its axial ends, wherein in particular the bearing ring having this guide section has an outer diameter which increases over the course of the insertion section along the axis or has an inner diameter which decreases over the course of the insertion section along the axis.

14. Roller bearing according to one of the preceding claims, **characterized in that**
the sliding ring and the stabilizing ring are arranged so as to be pressed together in a radial press fit and/or are produced by injection moulding methods, wherein in particular the sliding ring and the stabilizing ring are produced by multi-component injection moulding methods, and/or one of the sliding ring and the stabilizing ring is injection-moulded onto the other of the sliding ring and the stabilizing ring.

15. Roller bearing according to one of the preceding claims, **characterized in that**
at least one of the bearing rings, in particular the inner ring, has a flange which extends radially along the rolling elements and which covers the rolling elements at one of their axial sides, wherein in particular the flange is formed by the stabilizing ring, and in particular the flange bears against the sliding ring of the other of the bearing rings so as to run around the axis in sliding contact, wherein in particular cutouts are provided in the flange, distributed about the axis, wherein either the flange is formed by the stabilizing ring and the sliding ring extends with a section into the cutouts, or the flange is formed by the sliding ring and the stabilizing ring extends into the cutouts.

16. Roller bearing according to one of the preceding claims, **characterized in that**
the inner ring has, at its radial inner side, and/or the outer ring has, at its radial outer side, a protruding projection for non-rotatable engagement in a first part which is rotatably retained by the roller bearing to form a second part,
and/or **in that**
the inner ring has, at its radial inner side, a receptacle for receiving a shaft, wherein the receptacle has a diameter of at least 1 cm, in particular at least 5 cm, wherein the outer ring has an outer diameter which is less than 4 cm, in particular less than 3 cm, in particular at least 1 cm greater than the diameter of the receptacle of the inner ring.

17. Device comprising an outer part, in particular a frame part or transmission part, an inner part, in particular a shaft or a further transmission part, and a roller bearing according to one of the preceding claims,
**characterized in that**
the inner ring is connected to the inner part and the outer ring is connected to the outer part in a rotationally fixed manner, in particular in a press fit, and the parts are rotatably connected to one another by the roller bearing, wherein in particular the device is a bicycle and the outer part is a bicycle frame, in particular a wheel fork of the bicycle frame, or a transmission part of a bicycle transmission of the bicycle, and the inner part is a wheel axle, a bottom bracket axle or a further transmission part of the bicycle transmission.

## Revendications

1. Roulement à éléments roulants, en particulier roulement à billes, comprenant deux bagues de palier montées de manière à pouvoir tourner l'une par rapport à l'autre autour d'un axe, une bague intérieure et une bague extérieure, qui forment à chaque fois une section de guidage périphérique autour de l'axe d'un guidage prévu entre les bagues de palier, la section de guidage formée par la bague intérieure étant radialement opposée à la section de guidage formée par la bague extérieure et des éléments roulants, en particulier des billes, étant répartis autour de l'axe dans le guidage et étant disposés de manière adjacente aux deux sections de guidage, de sorte que lors d'une rotation des bagues de palier l'une par rapport à l'autre autour de l'axe, les éléments roulants roulent sur les deux sections de guidage, au moins l'une des bagues de palier présentant une bague de glissement qui forme la section de guidage de la bague de palier, ainsi qu'une bague de stabilisation qui est adjacente de manière périphérique autour de l'axe à la bague de glissement, **caractérisé en ce que** la bague de glissement est fabriquée à partir d'une première matière plastique et la bague de stabilisation est fabriquée à partir d'une deuxième matière plastique, la première matière plastique étant plus souple que la deuxième matière plastique, les éléments roulants étant en particulier montés sans lubrifiant dans le guidage, et **en ce que** la bague de stabilisation et la bague de glissement présentent à chaque fois des saillies réparties autour de l'axe, à chaque fois un évidement étant prévu entre deux saillies voisines, à chaque fois l'une des saillies de la bague de stabilisation étant disposée à chaque fois dans l'un des évidements de la bague de glissement et à chaque fois l'une des saillies de la bague de glissement étant disposée à chaque fois dans l'un des évidements de la bague de stabilisation.

2. Roulement à éléments roulants selon la revendication 1, **caractérisé en ce que**
chacune des bagues de palier présente à chaque fois une bague de glissement et une bague de stabilisation, la bague de glissement de la bague intérieure entourant en particulier la bague de stabilisation de la bague intérieure et la bague de stabilisation de la bague extérieure entourant la bague de glissement de la bague extérieure.

3. Roulement à éléments roulants selon l'une quelconque des revendications précédentes,
**caractérisé en ce que**
les éléments roulants sont adjacents à la bague de glissement avec une surface d'appui au moins cinq fois plus grande qu'à la bague de stabilisation, la bague de stabilisation étant en particulier espacée des éléments roulants.

4. Roulement à éléments roulants selon l'une quelconque des revendications précédentes,
**caractérisé en ce que**
la première matière plastique présente une dureté avec une valeur Shore D inférieure à 75, en particulier inférieure à 70, en particulier inférieure à 65, et la deuxième matière plastique présentant une dureté avec une valeur Shore D qui est supérieure d'au moins 5, en particulier d'au moins 10, en particulier d'au moins 15 à la valeur Shore D de la première matière plastique, en particulier d'au moins 65, en particulier d'au moins 70, en particulier d'au moins 75, et/ou **en ce que**
la première matière plastique est un matériau de glissement.

5. Roulement à éléments roulants selon l'une quelconque des revendications précédentes,
**caractérisé en ce que**
un coefficient de frottement entre les éléments roulants et la première matière plastique est inférieur à un coefficient de frottement entre les éléments roulants et la deuxième matière plastique
et/ou **en ce que**
la première matière plastique contient une proportion plus élevée de lubrifiants que la deuxième matière plastique.

6. Roulement à éléments roulants selon l'une quelconque des revendications précédentes,
**caractérisé en ce que**
les éléments roulants sont montés de manière à pouvoir tourner l'un par rapport à l'autre avec une distance angulaire définie dans une cage de palier périphérique autour de l'axe, la cage de palier étant disposée radialement entre les sections de guidage de la bague intérieure et de la bague extérieure et étant fabriquée en particulier à partir d'un matériau de glissement, la bague intérieure, la bague extérieure et la cage de palier étant en particulier fabriquées à chaque fois à partir de matière plastique.

7. Roulement à éléments roulants selon l'une quelconque des revendications précédentes,
**caractérisé en ce que**
les éléments roulants sont fabriqués à partir d'un matériau qui présente une plus grande dureté que la première matière plastique et en particulier que la deuxième matière plastique, les éléments roulants étant en particulier fabriqués à partir de verre, de métal, d'une matière plastique ou d'une céramique.

8. Roulement à éléments roulants selon l'une quelconque des revendications précédentes,
**caractérisé en ce que**
la bague de glissement et la bague de stabilisation sont adjacentes l'une à l'autre par engagement par correspondance de forme aussi bien dans une direction le long de l'axe que perpendiculairement à l'axe

9. Roulement à éléments roulants selon l'une quelconque des revendications précédentes,
**caractérisé en ce que**
les saillies de la bague de glissement s'étendent sur au moins 30 % de la longueur d'étendue axiale de la bague de glissement et les saillies de la bague de stabilisation s'étendent sur au moins 30 % de la longueur d'étendue axiale de la bague de stabilisation.

10. Roulement à éléments roulants selon l'une quelconque des revendications précédentes,
**caractérisé en ce que**
au moins certaines des saillies de la bague de stabilisation et de la bague de glissement sont réalisées sous forme de saillies radiales et certains des évidements sous forme d'évidements radiaux, à chaque fois l'une des saillies radiales de la bague de stabilisation étant disposée à chaque fois dans l'un des évidements radiaux de la bague de glissement et à chaque fois l'une des saillies radiales de la bague de glissement étant disposée à chaque fois dans l'un des évidements radiaux de la bague de stabilisation, les saillies radiales de la bague de glissement étant en particulier plus larges que les saillies radiales de la bague de stabilisation, au moins certaines des saillies radiales présentant en particulier à chaque fois une largeur augmentant le long de leur étendue radiale dans le logement radial à chaque fois associé à celles-ci en formant une contre-dépouille.

11. Roulement à éléments roulants selon l'une quelconque des revendications précédentes,
**caractérisé en ce que**
la bague de stabilisation et la bague de glissement présentent à chaque fois un premier groupe et un deuxième groupe de saillies, les deux groupes de saillies étant prévus à des extrémités axiales opposées de la bague de stabilisation ou de la bague de glissement et les éléments roulants étant disposés axialement entre les deux groupes de saillies et/ou les saillies du premier groupe étant réalisées sous forme de saillies axiales et les saillies du deuxième groupe étant réalisées sous forme de saillies radiales, à chaque fois une saillie du premier groupe étant en particulier disposée à l'intérieur d'une même plage angulaire autour de l'axe qu'une saillie associée du deuxième groupe.

12. Roulement à éléments roulants selon l'une quelconque des revendications précédentes,
**caractérisé en ce que**
la bague de glissement présente une plus grande longueur d'étendue moyennée sur une périphérie autour de l'axe dans la direction radiale que la bague de stabilisation.

13. Roulement à éléments roulants selon l'une quelconque des revendications précédentes,
**caractérisé en ce que**
les sections de guidage viennent en prise à chaque fois derrière les éléments roulants au niveau de leurs deux côtés axiaux, les sections de guidage présentant en particulier à chaque fois une section transversale en forme de section circulaire avec laquelle elles tournent autour de l'axe, les bagues de palier étant en particulier fixées l'une par rapport à l'autre dans leur position axiale par le fait que les éléments roulants viennent en prise derrière au niveau des deux côtés axiaux par le biais des deux sections de guidage,
et/ou **en ce que**
au moins l'une des sections de guidage est adjacente au niveau de l'une de ses extrémités axiales à une section d'introduction avec un biseau d'introduction, la bague de palier présentant cette section de guidage présentant en particulier un diamètre extérieur augmentant le long du tracé de la section d'introduction le long de l'axe ou un diamètre intérieur diminuant le long du tracé de la section d'introduction le long de l'axe.

14. Roulement à éléments roulants selon l'une quelconque des revendications précédentes,
**caractérisé en ce que**
la bague de glissement et la bague de stabilisation sont disposées de manière pressée l'une avec l'autre avec un ajustement serré radial et/ou sont fabriquées par un procédé de moulage par injection, la bague de glissement et la bague de stabilisation étant en particulier fabriquées par un procédé de moulage par injection à plusieurs composants et/ou l'une parmi la bague de glissement et la bague de stabilisation étant moulée par injection sur l'autre parmi la bague de glissement et la bague de stabilisation.

15. Roulement à éléments roulants selon l'une quelconque des revendications précédentes,
**caractérisé en ce que**
au moins l'une des bagues de palier, en particulier la bague intérieure, présente une bride qui s'étend radialement le long des éléments roulants et qui recouvre les éléments roulants au niveau de l'un de leurs côtés axiaux, la bride étant en particulier formée par la bague de stabilisation et la bride étant en particulier adjacente de manière périphérique autour de l'axe à la bague de glissement de l'autre des bagues de palier en appui de glissement, des découpures étant en particulier prévus de manière répartie autour de l'axe dans la bride, la bride étant formée par la bague de stabilisation et la bague de glissement s'étendant avec une section dans les découpures ou la bride étant formée par la bague de glissement et la bague de stabilisation s'étendant dans les découpures.

16. Roulement à éléments roulants selon l'une quelconque des revendications précédentes,
**caractérisé en ce que**
la bague intérieure présente au niveau de son côté intérieur radial et/ou la bague extérieure présente au niveau de son côté extérieur radial une saillie saillante pour l'engagement solidaire en rotation dans un premier élément qui est monté de manière à pouvoir tourner par rapport à un deuxième élément par le roulement à éléments roulants,
et/ou **en ce que**
la bague intérieure présente au niveau de son côté intérieur radial un logement pour recevoir un arbre, le logement présentant un diamètre d'au moins 1 cm, en particulier d'au moins 5 cm, la bague extérieure présentant un diamètre extérieur qui est supérieur de moins de 4 cm, en particulier de moins de 3 cm, en particulier d'au moins 1 cm au diamètre du logement de la bague intérieure.

17. Dispositif comprenant un élément extérieur, en particulier une partie de cadre ou une partie de transmission, un élément intérieur, en particulier un arbre ou une autre partie de transmission, ainsi qu'un roulement à éléments roulants selon l'une quelconque des revendications précédentes,
**caractérisé en ce que**
la bague intérieure est connectée à l'élément intérieur et la bague extérieure est connectée à l'élément extérieur à chaque fois de manière solidaire en rotation, en particulier avec un ajustement serré, et les éléments sont connectés l'un à l'autre de manière à pouvoir tourner par le roulement à éléments roulants, le dispositif étant en particulier une bicyclette et l'élément extérieur étant un cadre de bicyclette, en particulier une fourche de roue du cadre de bicyclette, ou une partie de transmission d'une transmission de bicyclette de la bicyclette et l'élément intérieur étant un axe de roue, un axe de pédalier ou une autre partie de transmission de la transmission de bicyclette.
